# EUROPEAN PATENT APPLICATION

(11) **EP 4 693 504 A1**
(43) Date of publication of application: **11.02.2026**
(21) Application number: 23929677.5
(22) Date of filing: 14.06.2023
(51) Int. Cl.: H01M 4/62, H01M 4/13, H01M 10/0525, H01M 10/054

(54) **SECONDARY BATTERY FUNCTIONAL MATERIAL, PREPARATION METHOD THEREFOR AND USE THEREOF**

(30) Priority: 27.03.2023 CN 202310300406
(71) Applicant: Tianmulake Excellent Anode Materials Co, Ltd., Liyang, Jiangsu 213330 (CN)
(72) Inventor: LUO, Fei, Liyang, Jiangsu 213300 (CN); LIU, Bonan, Liyang, Jiangsu 213300 (CN); LU, Hao, Liyang, Jiangsu 213300 (CN); SHI, Yongming, Liyang, Jiangsu 213300 (CN)
(74) Representative: Glück Kritzenberger Patentanwälte PartGmbB
(86) International application number: PCT/CN2023/100109
(87) International publication number: WO 2024/198100

(57) **Abstract**

The present invention discloses secondary battery functional material , a preparation method therefor and the use thereof. The functional material for secondary batteries comprises a carrier material and an active material. The carrier material is a porous material which had a catalytic effect on the active material at a voltage of 2.0-4.8 V, and the carrier material comprises one or more of porous metal materials, porous ceramic materials, porous carbon materials, porous plastics, and molecular sieves. The active material comprises a compound containing lithium element or a compound containing sodium element, the active material being uniformly distributed in the form of fine particles in pores or the surface of the carrier material ; and the particle size Dv50 of the active material being between 0.1 nm and 10 µm.The particle size Dv50 of the carrier material is between 1 nm and 100 µm.The secondary battery functional material is applied to secondary batteries, and can supplement irreversible active ions consumed during the charging and discharging cycle process of the secondary batteries, thus endowing the secondary batteries with advantages of high capacity and long cycle life.

## Description

### CROSS-REFERENCE TO RELATED APPLICATION

This application claims priority for Chinese patent application No. 202310300406.0, entitled "SECONDARY BATTERY FUNCTIONAL MATERIAL ,PREPARATION METHOD THEREFOR AND USE THEREOF", filed with China National Intellectual Property Administration on March 27, 2023.

### BACKGROUND OF THE INVENTION

### 1. Technical Field

The present invention relates to the technical field of secondary battery materials, in particular to secondary battery functional material , and a preparation method and application thereof.

### 2. Description of Related Art

In recent years, as people have become aware of the environmental impact of fossil fuels, there has been a gradual shift to electrical energy in mobile devices, industrial tools, and electric vehicles, leading to a rapid increase in demand for efficient secondary batteries. The widespread use of these secondary batteries requires them to have performance such as high energy density, high safety performance, and a long lifespan.

Lithium-ion batteries and sodium-ion batteries are two key types of batteries in the energy storage and electronics systems. Although some products have already been commercialized, their energy density, lifespan, and safety performance still do not fully meet user needs. For example, during the initial charge and discharge cycles, both lithium-ion and sodium-ion batteries experience irreversible consumption of active ions, resulting in low first-cycle Coulombic efficiency, which affects the energy density and lifespan of the batteries.

To address the aforementioned issues, a high-performance functional material is developed that can supplement the consumed irreversible active ions. This approach seeks to resolve the problem of irreversible active ion loss during the initial charging and discharging processes of secondary batteries, which leads to low initial-cycle Coulombic efficiency, thereby affecting the energy density and lifespan of the batteries.

### BRIEF SUMMARY OF THE INVENTION

Embodiments of the present invention provide secondary battery functional material, and a preparation method and application thereof. By mixing a solution containing precursors of a lithium or sodium active material with a carrier material, followed by physical processes (such as shaking or dispersive stirring), the active material is uniformly distributed in pores and on a surface of the carrier material in the form of small particles, to obtain secondary battery functional material . The secondary battery functional material involves the adsorption of the active material within the pores of the carrier material, effectively combining the active material and the carrier material. The carrier material, when held under a voltage of 2.0-4.8 V, can catalyze reactions of the active material, reducing the reaction activation energy of the active material. Additionally, the presence of the active material in the form of small particles results in more reaction sites and a larger reaction area, enhancing the overall reactivity of the material. When the functional material for secondary batteries provided by the embodiments of the present invention is applied in secondary batteries, a substantial number of active ions can be provided to replenish the irreversible active ions consumed during charge and discharge cycles, granting the secondary batteries high capacity and long cycle life.

In a first aspect, an embodiment of the present invention provides secondary battery functional material . The secondary battery functional material comprises a carrier material and an active material;
wherein the carrier material is a porous material catalyzing the active material at a voltage of 2.0-4.8 V, and the carrier material comprises one or more of the following: porous metal materials, porous ceramic materials, porous carbon materials, porous plastics, and molecular sieves;
the active material comprises lithium-containing compounds or sodium-containing compounds, and the active material is uniformly distributed in pores and on a surface of the carrier material in the form of small particles;
a particle size Dv50 of the active material is between 0.1 nm and 10 µm, a particle size Dv50 of the carrier material is between1 nm and 100 µm, and a particle size Dv50 of the functional material for secondary batteries is between1 nm and 120 µm;
the lithium-containing compounds comprise one or more of the following: lithium carbonate, lithium hydroxide, lithium oxalate, lithium acetate, lithium formate, lithium oxide, lithium peroxide, lithium sulfide, lithium fluoride and lithium nitride;
the sodium-containing compounds comprise one or more of the following: sodium carbonate, sodium hydroxide, sodium oxalate, sodium acetate, sodium formate, sodium oxide, sodium peroxide, sodium sulfide and sodium fluoride;
the porous metal materials comprise aluminum, copper, iron, silver, titanium, nickel, tungsten, cobalt, molybdenum, platinum, magnesium, lead and zinc or one or more alloy materials of the above metals;
the porous ceramic materials comprise one or more of the following: porous alumina, porous zirconia, porous magnesia, porous silicon carbide, porous silicon nitride, cordierite, high silica silicate, aluminosilicate and aluminum titanate;
the porous carbon materials comprise one or more of the following: activated carbon, expanded graphite, activated carbon fiber, carbon nanotube and porous acetylene black;
the porous plastics comprise one or more of the following: porous polyethylene, porous polystyrene, porous polyvinyl chloride, porous polypropylene, porous polyurethane, and porous phenolic resin;
the molecular sieves comprise one or more of the following: cross-linked dextran, carbon molecular sieves, or zeolites; and
the functional material for secondary batteries is obtained by adsorbing a clear solution containing precursors of the active material into the pores of the carrier material, followed by drying treatment, with a temperature for the drying treatment being 60°C-300°C.

Preferably, a pore diameter of the pores of the carrier material is 0.1 nm-20 µm;
a specific surface area of the carrier material is 5-3000 m²/g; and
a mass ratio of the active material to the carrier material is 0.1:1-100:1.

In a second aspect, an embodiment of the present invention provides a preparation method of the functional material for secondary batteries as described in the first aspect, which comprises:
dissolving a specific quantity of a precursor of an active material into a solvent, and stirring uniformly to obtain a clear solution;
adding a specific quantity of a carrier material into the clear solution and dispersing adequately and uniformly to allow the clear solution to be adsorbed into pores of the carrier material, thereby obtaining a solution of a composite material; and
drying the solution of the composite material to remove the solvent, and allowing the clear solution in pores of the composite material to crystallize into a fine particulate active material, ultimately obtaining the functional material for secondary batteries;
wherein the carrier material comprises one or more of the following: porous metal materials, porous ceramic materials, porous carbon materials, porous plastics, and molecular sieves; and
the active material comprises lithium-containing compounds or sodium-containing compounds.

Preferably, the lithium-containing compounds comprise one or more of the following: lithium carbonate, lithium hydroxide, lithium oxalate, lithium acetate, lithium formate, lithium oxide, lithium peroxide, lithium sulfide, lithium fluoride and lithium nitride;
the sodium-containing compounds comprise one or more of the following: sodium carbonate, sodium hydroxide, sodium oxalate, sodium acetate, sodium formate, sodium oxide, sodium peroxide, sodium sulfide and sodium fluoride;
the solvent comprises one or more of the following: deionized water, ethanol, ether, acetone, N-methylpyrrolidone (NMP), N, N-dimethylformamide (DMF), ethyl acetate, benzene and chloroform; and
a mass ratio of the solvent to the active material is 5:1-200:1.

Preferably, the porous metal materials comprise aluminum, copper, iron, silver, titanium, nickel, tungsten, cobalt, molybdenum, platinum, magnesium, lead and zinc or one or more alloy materials of the above metals;
the porous ceramic materials comprise one or more of the following: porous alumina, porous zirconia, porous magnesia, porous silicon carbide, porous silicon nitride, cordierite, high silica silicate, aluminosilicate and aluminum titanate;
the porous carbon materials comprise one or more of the following: activated carbon, expanded graphite, activated carbon fiber, carbon nanotube and porous acetylene black;
the porous plastics comprise one or more of the following: porous polyethylene, porous polystyrene, porous polyvinyl chloride, porous polypropylene, porous polyurethane, and porous phenolic resin; and
the molecular sieves comprise one or more of the following: cross-linked dextran, carbon molecular sieves, or zeolites.

Preferably, methods for the adequate dispersion comprise one or more of the following: shaking dispersion, stirring dispersion, ultrasonic dispersion, and ball milling dispersion;
devices for the adequate dispersion comprise one or more of the following: oscillating shakers, stirrers, ultrasonic dispersion machines, or ball mills; and
a duration for the adequate dispersion is 0.5-72 hours.

Preferably, methods for the drying treatment comprise one or more of the following: rotary evaporation drying, stir-heating drying, spray drying, vacuum heating drying, and forced air drying after filtration; and
a temperature for the drying treatment is 60°C-300°C, and a duration is 0.5-48 hours.

In a third aspect, an embodiment of the present invention provides a positive electrode sheet which comprises the functional material for secondary batteries as described in the first aspect.

In a fourth aspect, an embodiment of the present invention provides a secondary battery which comprises the positive electrode sheet as described in the third aspect.

Embodiments of the present invention provide secondary battery functional material, and a preparation method and application thereof. By mixing a solution containing precursors of a lithium or sodium active material with a carrier material, followed by physical processes (such as shaking or dispersive stirring), the active material is uniformly distributed in pores and on a surface of the carrier material in the form of small particles, resulting in secondary battery functional material. The secondary battery functional material involves the adsorption of the active material within the pores of the carrier material, effectively combining the active material and the carrier material. The carrier material, when held under a certain voltage, can catalyze reactions of the active material, reducing the reaction activation energy of the active material. Additionally, the presence of the active material in the form of small particles results in more reaction sites and a larger reaction area, enhancing the overall reactivity of the material. When the functional material for secondary batteries provided by the embodiments of the present invention is applied in secondary batteries, a substantial number of active ions can be provided to replenish the irreversible active ions consumed during charge and discharge cycles, thus endowing the secondary batteries with advantages of high capacity and long cycle life.

The preparation method of the functional material for secondary batteries provided by the embodiment of the present invention is easy to operate, cost-effective, and suitable for large-scale production.

### BRIEF DESCRIPTION OF THE SEVERAL VIEWS OF THE DRAWINGS

The technical solutions of the embodiments of the present invention will be described in further detail with reference to the drawings and embodiments.
Fig. 1 is a flowchart of a preparation method of secondary battery functional material according to an embodiment of the present invention.
Fig. 2 is a scanning electron microscope (SEM) diagram of secondary battery functional material provided in Embodiment 1 of the present invention.
Fig. 3 is a initial-cycle charge-discharge graph of secondary battery functional material provided in Embodiment 1 of the present invention.
Fig. 4 is an X-ray diffraction (XRD) diagram of secondary battery functional material and the active material lithium succinate provided in Embodiment 2 of the present invention.
Fig. 5 is a initial-cycle charge-discharge graph of secondary battery functional material provided in Embodiment 2 of the present invention.
Fig. 6 shows a comparison of the initial-cycle charge-discharge graphs for CR2032 button cells assembled in Embodiment 3 of the present invention and Comparative example 1.

### DETAILED DESCRIPTION OF THE INVENTION

The present invention will be further explained below by referring to drawings and specific embodiments, but it should be understood that these embodiments are only for more detailed explanation, and should not be construed as limiting the present present invention in any way, that is, not intended to limit the scope of protection of the present present invention.

An embodiment of the present invention provides secondary battery functional material , comprising a carrier material and an active material; a mass ratio of the active material to the carrier material is 0.1:1-100:1; and the active material is uniformly distributed in pores and on a surface of the carrier material in the form of small particles.

Here, the carrier material is a porous material catalyzing the active material at a voltage of 2.0-4.8 V; the carrier material has strong ionic adsorption, which can reduce the reaction activation energy and accelerate the release of active ions, thereby facilitating the catalytic effect; a particle size Dv50 of the carrier material is 1 nm-100 µm, and a particle size Dv50 of the functional material for secondary batteries is 1 nm-120 µm; a pore diameter of the pores of the carrier material is 0.1 nm-20 µm; and a specific surface area of the carrier material is 5m²/g-3000 m²/g.

The carrier material comprises one or more of the following: porous metal materials, porous ceramic materials, porous carbon materials, porous plastics, and molecular sieves; the porous metal materials comprise aluminum, copper, iron, silver, titanium, nickel, tungsten, cobalt, molybdenum, platinum, magnesium, lead and zinc or one or more alloy materials of the above metals; the porous ceramic materials comprise one or more of the following: porous alumina, porous zirconia, porous magnesia, porous silicon carbide, porous silicon nitride, cordierite, high silica silicate, aluminosilicate and aluminum titanate; the porous carbon materials comprise one or more of the following: activated carbon, expanded graphite, activated carbon fiber, carbon nanotube and porous acetylene black; the porous plastics comprise one or more of the following: porous polyethylene, porous polystyrene, porous polyvinyl chloride, porous polypropylene, porous polyurethane, and porous phenolic resin; and the molecular sieves comprise one or more of the following: cross-linked dextran, carbon molecular sieves, or zeolites.

The active material comprises lithium-containing compounds or sodium-containing inorganic compounds; the lithium-containing inorganic compounds comprise one or more of the following: lithium carbonate, lithium hydroxide, lithium oxalate, lithium acetate, lithium formate, lithium oxide, lithium peroxide, lithium sulfide, lithium fluoride and lithium nitride; the sodium-containing compounds comprise one or more of the following: sodium carbonate, sodium hydroxide, sodium oxalate, sodium acetate, sodium formate, sodium oxide, sodium peroxide, sodium sulfide and sodium fluoride; and a particle size Dv50 of the active material is 0.1 nm-10 µm.

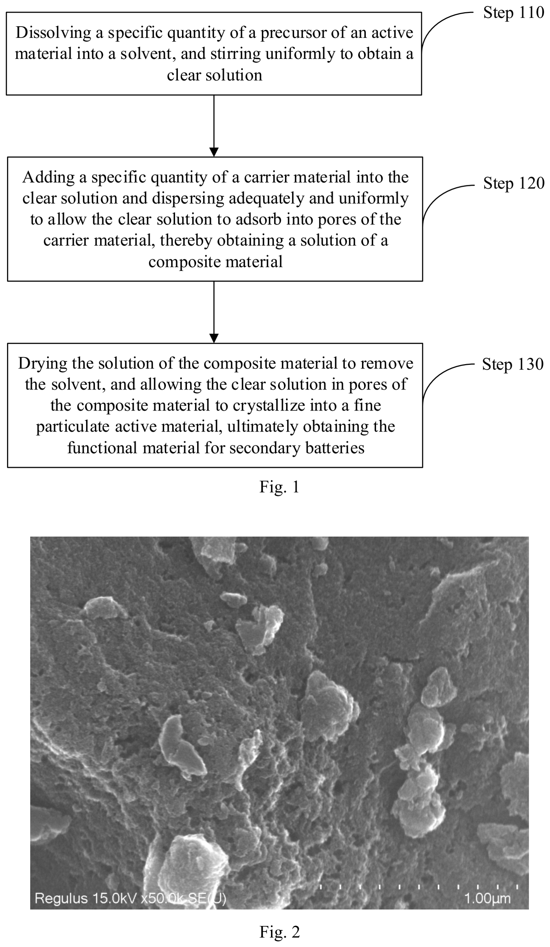

An embodiment of the present invention provides a preparation method of the functional material for secondary batteries as described above. As shown in Fig. 1, it comprises the following steps:
step 110, dissolving a specific quantity of a precursor of an active material into a solvent, and stirring uniformly to obtain a clear solution;
where the precursor of the active material comprises lithium-containing compound raw materials or sodium-containing compound raw materials; the lithium-containing compounds comprise one or more of the following: lithium carbonate, lithium hydroxide, lithium oxalate, lithium acetate, lithium formate, lithium oxide, lithium peroxide, lithium sulfide, lithium fluoride and lithium nitride; the sodium-containing compounds comprise one or more of the following: sodium carbonate, sodium hydroxide, sodium oxalate, sodium acetate, sodium formate, sodium oxide, sodium peroxide, sodium sulfide and sodium fluoride;
the solvent comprises one or more of the following: deionized water, ethanol, ether, acetone, N-methylpyrrolidone (NMP), N, N-dimethylformamide (DMF), ethyl acetate, benzene and chloroform;
a mass ratio of the solvent to the active material is 5:1-200:1;
the method for uniform stirring in this step is a conventional method aimed at achieving a homogeneous mixture of the active material and the solvent, and a stirring device comprises, but not limited to, any one of a mixer, ultrasonic disperser, or high-speed mixer;
step 120, adding a specific quantity of a carrier material into the clear solution and dispersing adequately and uniformly to allow the clear solution to adsorb into pores of the carrier material, thereby obtaining a solution of a composite material;
where the carrier material comprises one or more of the following: porous metal materials, porous ceramic materials, porous carbon materials, porous plastics, and molecular sieves; the porous structure of the carrier material enables it to have a greater adsorption affinity for solutes in the clear solution during the adsorption process;
the porous metal materials comprise aluminum, copper, iron, silver, titanium, nickel, tungsten, cobalt, molybdenum, platinum, magnesium, lead and zinc or one or more alloy materials of the above metals;
the porous ceramic materials comprise one or more of the following: porous alumina, porous zirconia, porous magnesia, porous silicon carbide, porous silicon nitride, cordierite, high silica silicate, aluminosilicate and aluminum titanate;
the porous carbon materials comprise one or more of the following: activated carbon, expanded graphite, activated carbon fiber, carbon nanotube and porous acetylene black;
the porous plastics comprise one or more of the following: porous polyethylene, porous polystyrene, porous polyvinyl chloride, porous polypropylene, porous polyurethane, and porous phenolic resin;
the molecular sieves comprise one or more of the following: cross-linked dextran, carbon molecular sieves, or zeolites;
methods for the adequate dispersion comprise one or more of the following: shaking dispersion, stirring dispersion, ultrasonic dispersion, and ball milling dispersion; devices for the adequate dispersion comprise one or more of the following: oscillating shakers, stirrers, ultrasonic dispersion machines, or ball mills; a duration for the adequate dispersion is from 0.5 hour to 72 hours; and
step 130, drying the solution of the composite material to remove the solvent, and allowing the clear solution in pores of the composite material to crystallize into a fine particulate active material, ultimately obtaining the functional material for secondary batteries;
where methods for the drying treatment comprise one or more of the following: rotary evaporation drying, stir-heating drying, spray drying, vacuum heating drying, and forced air drying after filtration; and a temperature for the drying treatment is 60°C-300°C, and a duration is 0.5-48 hours.

According to the functional material for secondary batteries prepared in this embodiment of the present invention, the active material is primarily distributed in the form of small particles uniformly within the pores of the carrier material, with some particles located on the surface of the carrier material but not forming a coating layer structure.

The functional material for secondary batteries prepared using the above preparation method can be used as additives for positive electrode active materials in the preparation of positive electrode sheet.

Here, the positive electrode sheet comprises a positive current collector, a positive electrode active material, secondary battery functional material , a conductive agent, and a binder.

The positive current collector comprises, but not limited to, aluminum foil.

The cathode active material comprises any one of lithium cobalt oxide, lithium manganese oxide, lithium iron phosphate, lithium nickel cobalt manganese oxide ternary materials, sodium cobalt oxide, vanadium pentoxide, Prussian blue, sodium iron phosphate with an olivine structure, NASICON-structured Na₃V₂ (PO₄)₃, and sodium nickel iron manganese oxide with a layered structure.

The conductive agent comprises, but not limited to, one or more of the following: carbon black, carbon nanotube, acetylene black and Ketjen black.

The binder comprises, but not limited to, one or more of the following: polyvinylidene fluoride, polyvinylidene fluoride-hexafluoropropylene copolymer, carboxymethyl cellulose, sodium carboxymethyl cellulose, polymethyl methacrylate, polyacrylate, polyacrylonitrile, styrene-butadiene rubber, polyvinyl alcohol, polytetrafluoroethylene, polyacrylamide, polyvinyl acetate and polyurethane.

An embodiment of the present invention provides a secondary battery, which comprises a lithium-ion battery or a sodium-ion battery.

Wherein, the secondary battery consists of the positive electrode sheetcontaining the functional material for secondary batteries, a separator, an electrolyte solution or solid electrolyte, and a negative plate.

The separator comprises, but not limited to, any of the following: double-sided aluminum oxide separators, separators containing sodium-ion solid electrolytes, and separators containing lithium-ion solid electrolytes. A base membrane of the separator comprises any of the following: polyolefin membranes, non-woven fabric separators, fiber separators, and polyaramid separators.

The negative electrode sheet comprises any of the following: lithium sheets, sodium sheets, or negative current collectors containing nnegative electrode active materials. The negative current collector comprises, but not limited to, copper foil or titanium foil; additionally, an active material layer on a surface of the negative current collector contains a conductive agent and a binder. The negative electrodeactive materials comprise, but not limited to, carbon-based materials, tin-based negative electrode materials, silicon-based negative electrodematerials, silicon-carbon composites, nano-oxide materials, or iron ester negative electrodematerials. The carbon-based materials comprise any of the following: graphite, hard carbon, carbon fibers, petroleum coke, or mesophase carbon microspheres.

The electrolyte solution consists of a solute and a solvent.

The solute is a conductive salt, which comprises any of the following: sodium perchlorate (NaClO₄), sodium tetrafluoroborate (NaBF₄), sodium hexafluorophosphate (NaPF₆), sodium hexafluoroarsenate (NaAsF₆), sodium trifluoroacetate (CF₃COONa), lithium perchlorate (LiClO₄), lithium hexafluorophosphate (LiPF₆), lithium hexafluoroborate (LiBF₆), or lithium hexafluoroarsenate (LiAsF₆).

The solvent comprises any of the following: ethylene carbonate (EC), propylene carbonate (PC), butylene carbonate (BC), vinylene carbonate (VC), fluorinated ethylene carbonate (FEC), ethyl methyl carbonate (EMC), dimethyl carbonate (DMC), diethyl carbonate (DEC), dipropyl carbonate (DPC), methyl propyl carbonate (MPC), ethyl propyl carbonate (EPC), γ-butyrolactone (BL), methyl propionate (MP), methyl butyrate (MB), ethyl acetate (EA), ethyl propionate (EP), propyl propionate (PP), ethyl butyrate (EB), 1,3-dioxolane (DOL), dimethoxyethane (DME), diethylene glycol dimethyl ether (DEGDME), triethylene glycol dimethyl ether (TRGDME), tetraethylene glycol dimethyl ether (TEGDME), ethyl methanesulfonate (EMS), or dimethyl sulfoxide (DMSO).

In order to better understand the technical scheme provided by the present invention, the preparation process and characteristics of the functional material for secondary batteries are described below with several specific embodiments.

### Embodiment 1

This embodiment provides a preparation process and performance test for secondary battery functional material . The preparation process comprises the following steps:
step 110, weighing 120 g of deionized water and placing the same in a beaker, dissolving 8 g of sodium fluoride with a particle size Dv50 of 1 µm into the 120 g of deionized water, and stirring evenly using a magnetic stirrer to obtain a clear solution;
step 120, adding 8 g of porous zirconia with a particle size Dv50 of 20 µm and a specific surface area of 850 m²/g to the clear solution, and placing the same in an oscillating shaker for shaking dispersion at a frequency of 80 Hz for 48 hours to allow the active material to be adsorbed into the pores of the carrier material, yielding a composite solution; and
step 130, placing the composite solution in a rotary evaporator and drying the same by rotary evaporation to concentrate the solution into a thick liquid, transferring the thick liquid to a blast drying oven and drying the same at 120°C for 1 hour, and after removal, grinding and sieving the material to obtain secondary battery functional material with sodium fluoride adsorbed in the pores and on the surface of the porous zirconia, and the secondary battery functional material for having a particle size Dv50 of 20.2 µm.

The SEM diagram of the functional material for secondary batteries prepared in Embodiment 1 of the present invention is shown in Fig. 2. As shown in Fig. 2, it can be seen that the secondary battery functional material has an irregular shape, and larger pore sizes can be observed on the surface of the material.

The functional material for secondary batteries obtained from this embodiment was used as a positive electrode active material to prepare positive plates, which were then assembled into sodium-ion batteries. The electrochemical performance of the sodium-ion batteries was tested. Details are as follows.

Preparation of sodium-ion batteries: The functional material for secondary batteries prepared in this embodiment was mixed with polyvinylidene fluoride (PVDF) and conductive carbon black (SP) in a mass ratio of 8:1:1 to form a slurry, which was then coated onto aluminum foil to prepare the positive electrode sheet. The positive electrode sheets were then assembled with sodium sheets, double-sided alumina separators, and an electrolyte into CR2032 button cells using conventional methods. The electrolyte was a solution of ethylene carbonate (EC) and dimethyl carbonate (DEC) with a volume ratio of 1:1 containing 1 mol/L sodium hexafluorophosphate (NaPF₆) .

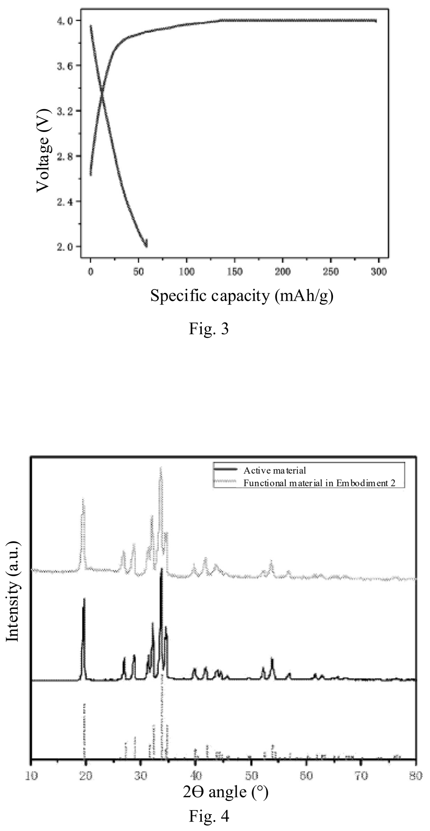

Testing method: The battery was charged to 4.0 V at a 0.1 C rate, followed by constant voltage charging at 4.0 V until the current reaches 0.02 C, and then discharged to 2 V at a 0.1 C rate. The initial-cycle charge-discharge test curve is shown in Fig. 3. As shown in the figure, it can be seen that the initial-cycle charge specific capacity of the battery was 296.9 mAh/g, and the discharge specific capacity was 58.3 mAh/g. This indicates that the battery prepared using only the secondary battery functional material as the positive electrode active material can release a significant amount of active sodium ions during the initial charge cycle. Furthermore, it demonstrates that the functional material for secondary batteries provided in this embodiment can be used as a functional material for supplementing active sodium ions in sodium-ion batteries.

### Control experiment for Embodiment 1

This comparison example used the active material sodium fluoride from Embodiment 1 as the positive electrodeactive material to prepare positive plates, assembled sodium-ion batteries, and then conducted electrochemical performance testing on the sodium-ion batteries. The battery assembly and testing methods were the same as those in Embodiment 1. The tested initial-cycle charging specific capacity was 0.42 mAh/g, and the discharging specific capacity was 0.39 mAh/g, which were far less than the tested values of the initial-cycle charging and discharging specific capacities in Embodiment 1. This comparison further demonstrates that the secondary battery functional material prepared in Embodiment 1 of the present invention can release more active sodium ions during the first-cycle charging process.

### Embodiment 2

This embodiment provides a preparation process and performance test for secondary battery functional material . The preparation process comprises the following steps:
step 110, dissolving 12 g of lithium oxalate with a particle size Dv50 of 6 µm in 200 g of deionized water, then placing the material in a disperser and performing dispersive stirring at 500 rpm for 30 minutes to ensure stirring evenlyand yielding a clear solution;
step 120, adding 8 g of porous polyurethane with a particle size Dv50 of 2 µm and a specific surface area of 920 m²/g to the clear solution, and continuing dispersive stirring in the disperser for 40 hours to allow the active material to be adsorbed into the pores of the carrier material, yielding a composite solution; and
step 130, placing the composite solution in a heating stirrer and heating and stirring the same to concentrate the solution into a thick liquid, transferring the thick liquid to a blast drying oven and drying the same at 110°C for 2 h, and after removal, grinding and sieving the material to obtain secondary battery functional material with lithium oxalate adsorbed in the pores and on the surface of the porous polyurethane, the functional material for secondary batteries having a particle size Dv50 of 2 µm.

The XRD diagram of the functional material for secondary batteries prepared in Embodiment 2 of the present invention is shown in Fig. 4. As can be seen from Fig. 4, the characteristic peaks of the functional material for secondary batteries are consistent with those of the active material lithium oxalate. This indicates that the crystal structure of the active material lithium oxalate has not changed after being loaded into the carrier material porous polyurethane.

The secondary battery functional material obtained from this embodiment was used to prepare positive electrode sheet which were then assembled into lithium-ion batteries. The electrochemical performance of the lithium-ion batteries was tested. Details are as follows.

Preparation of lithium-ion batteries: The functional material for secondary batteries prepared in this embodiment was mixed with polyvinylidene fluoride (PVDF) and conductive carbon black (SP) in a mass ratio of 8:1:1 to form a slurry, which was then coated onto aluminum foil to prepare the positive electrode sheets. The positive plates were then assembled with lithium sheets, double-sided alumina separators, and an electrolyte into CR2032 button cells using conventional methods. The electrolyte was a solution of ethylene carbonate (EC) and dimethyl carbonate (DEC) with a volume ratio of 1:1 containing 1 mol/L sodium hexafluorophosphate (NaPF₆).

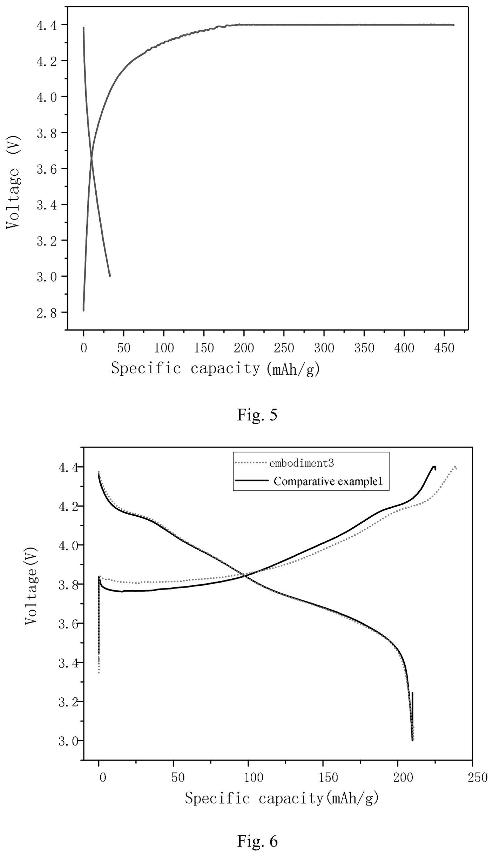

Testing method: The battery was charged to 4.4 V at a 0.1 C rate, followed by constant voltage charging at 4.4 V until the current reaches 0.02 C, and then discharged to 3 V at a 0.1 C rate. The initial-cycle charge-discharge test curve is shown in Fig. 5. From the figure, it can be seen that the initial-cycle charge specific capacity of the material was 461.7 mAh/g, and the discharge specific capacity was 32.6 mAh/g. This indicates that the lithium-ion battery prepared using only the functional material for secondary batteries as the positive electrode active material can release a significant amount of active lithium ions during the initial charge cycle. Furthermore, it demonstrates that the secondary battery functional material provided in this embodiment can be used as a functional material for supplementing active lithium ions in lithium-ion batteries.

### Control experiment for Embodiment 2

This comparison example used the active material lithium oxalate from Embodiment 2 as the positive electrode active material to prepare positive electrode sheets, assembled lithium-ion batteries, and then conducted electrochemical performance testing on the lithium-ion batteries. The battery assembly and testing methods were the same as those in Embodiment 2. The tested initial-cycle charging specific capacity was 36.8 mAh/g, and the discharging specific capacity was 1.2 mAh/g, which were far less than the tested values of the initiali-cycle charging and discharging specific capacities in Embodiment 2. This comparison further demonstrates that the secondary battery functional material prepared in Embodiment 2 of the present invention can release more active lithium ions during the initial-cycle charging process.

### Embodiment 3

This embodiment provides a preparation process and performance test for secondary battery functional material . The preparation process comprises the following steps:
step 110, placing 1.8 kg of lithium carbonate with a particle size Dv50 of 500 nm and 20 kg of deionized water in a stirring tank, and stirring for 2 hours until completely dissolved to obtain a clear solution;
step 120, adding 1.2 kg of cross-linked dextran with a particle size Dv50 of 5 µm and a specific surface area of 880 m²/g to the clear solution, and continuing stirring in the stirring tank for 24 hours to allow the active material lithium carbonate to be adsorbed into the pores of the carrier material cross-linked dextran, yielding a composite solution; and
step 130, placing the composite solution in a spray dryer with an inlet temperature of 250°C and an outlet temperature of 120°C, and performing spray granulation to obtain secondary battery functional material with lithium carbonate adsorbed in the pores and on the surface of the cross-linked dextran, the functional material for secondary batteries having a particle size Dv50 of 5 µm.

The secondary battery functional material obtained from this embodiment was used to prepare positive electrode sheets which were then assembled into lithium-ion batteries. The electrochemical performance of the lithium-ion batteries was tested. Details are as follows.

Preparation of lithium-ion batteries: The functional material for secondary batteries prepared in this embodiment was mixed with polyvinylidene fluoride (PVDF), conductive carbon black (SP) and the ternary cathode material NCM811 in a mass ratio of 5:2:2:91 to form a slurry, which was then coated onto aluminum foil to prepare the positive plates. The positive plates were then assembled with lithium sheets, double-sided alumina separators, and an electrolyte into CR2032 button cells using conventional methods. The electrolyte was a solution of ethylene carbonate (EC) and dimethyl carbonate (DEC) with a volume ratio of 1:1 containing 1 mol/L sodium hexafluorophosphate (NaPF₆).

Testing method: The battery was charged to 4.4 V at a 0.1 C rate, followed by constant voltage charging at 4.4 V until the current reaches 0.02 C, and then discharged to 3 V at a 0.1 C rate. The first-cycle charge-discharge test curve is shown in Fig. 6. From the figure, it can be seen that the initial-cycle charge specific capacity of the material was 239.5 mAh/g, the discharge specific capacity was 210.4 mAh/g, and the first-cycle Coulombic efficiency was 87.8%.

In order to better illustrate the effect of the embodiments of the present invention, Comparative example 1 is compared with Embodiment 3.

### Comparative example 1

This comparative example differed from Embodiment 3 in that it did not use secondary battery functional material to prepare positive plates. The other methods for assembling batteries were the same. PVDF, SP, and the ternary positive electrode material NCM811 were mixed in a mass ratio of 2:2:96 to form a slurry, which was then coated and prepared into positive electrode sheets, the positive plates were then assembled into CR2032 button cells following the method of Embodiment 3, and tests were conducted according to the procedure in Embodiment 3.

The initial-cycle charge-discharge curve of the battery assembled in this comparative example is shown in Fig. 6. From the figure, it can be seen that the initial-cycle charge specific capacity of the material was 225.2 mAh/g, the discharge specific capacity was 209.8 mAh/g, and the initial-cycle Coulombic efficiency was 93.2%.

The initial-cycle charge specific capacity of the battery in Embodiment 3 was greater than that of the material in Comparative example 1, indicating that the material can release more active lithium ions during the initial-cycle charging process. Although the initial-cycle Coulombic efficiency of Embodiment 3 appeared to be less than that of Comparative example 1, in half-cell tests, with the same lithium intercalation capacity, the battery using the functional material for secondary batteries in Embodiment 3 had a greater lithium deintercalation capacity, so the initial-cycle efficiency appeared to be lower, indicating that the functional material for secondary batteries was functional. The difference in charge specific capacity between the two was 14.3 mAh/g, which, when converted to the contribution of the functional material for secondary batteries, was 511.2 mAh/g, indicating that the functional material for secondary batteries in Embodiment 3 was highly effective in supplementing specific capacity.

### Embodiment 4

This embodiment provides a preparation process and performance test for secondary battery functional material . The preparation process comprises the following steps:

step 110, dissolving 5 g of sodium acetate with a particle size Dv50 of 1 µm in 180 g of ethyl alcohol, then placing the material in a disperser and performing dispersive stirring for 20 min to ensure homogeneous mixing, yielding a clear solution;

step 120, adding 15 g of cordierite with a particle size Dv50 of 20 µm and a specific surface area of 80 m²/g to the clear solution, and placing the same in a ball mill for ball milling dispersion for 16 hours to allow the active material sodium acetate to adsorb into the pores of the carrier material cordierite, yielding a composite solution; and

step 130, placing the composite solution in a heating stirrer and heating and stirring the same to concentrate the solution into a thick liquid, transferring the thick liquid to a blast drying oven and drying the same at 90°C for 1 hour, and after removal, grinding and sieving the material to obtain secondary battery functional material with sodium acetate adsorbed in the pores and on the surface of the cordierite,and the functional material for secondary batteries having a particle size Dv50 of 6 µm.

The functional material for secondary batteries obtained from this embodiment was used to prepare positive electrode sheets which were then assembled into sodium-ion batteries. The electrochemical performance of the sodium-ion batteries was tested. The preparation process and testing method for the sodium-ion batteries were the same as those in Embodiment 1. The initial-cycle charge specific capacity of the sodium-ion batteries was measured at 353.3 mAh/g, indicating a high desodium specific capacity.

In order to better illustrate the effect of the embodiments of the present invention, Comparative example 2 is compared with Embodiment 4.

### Comparative example 2

This comparative example differed from Embodiment 4 in that it did not use secondary battery functional material to prepare positive electrode sheets. The methods for assembling batteries were the same. Sodium acetate powder was mixed with PVDF and SP in a mass ratio of 8:1:1 to form a slurry, which was then coated and prepared into plates, the plates were then assembled into batteries using the same method as Embodiment 4, and tests were conducted according to the procedure in Embodiment 4. The test results showed that the initial-cycle charge specific capacity of the material was only 0.92 mAh/g. This was because secondary battery functional material was not used in Comparative example 2, resulting in no catalytic effect on sodium acetate, preventing its decomposition and capacity utilization.

By comparing the initial--cycle charge specific capacity results of Embodiment 4 and Comparative example 2, it is evident that the functional material in Embodiment 4 has a significantly higher desodium capacity, effectively catalyzing the decomposition of active components when loaded onto the porous ceramic material cordierite.

### Embodiment 5

This embodiment provides a preparation process and performance test for secondary battery functional material . The preparation process comprises the following steps:
step 110, weighing 250 g of benzene and placing the same in a conical flask, then adding 10 g of lithium nitride with a particle size Dv50 of 3 µm, and placing the mixture in an ultrasonic dispersion machine for ultrasonic dispersion for 1 hour to achieve complete dissolution of the lithium nitride in the benzene, yielding a clear solution;
step 120, adding 15 g of porous titanium with a particle size Dv50 of 720 nm and a specific surface area of 670 m²/g to the clear solution, and continuing dispersion in the ultrasonic dispersion machine for 24 hours to allow the active material lithium nitride to adsorb into the pores of the carrier material porous titanium, yielding a composite solution; and
step 130, placing the composite solution in a rotary evaporator and drying the same by rotary evaporation under vacuum pumping, and after removal, grinding and sieving the material to obtain secondary battery functional material with lithium nitride adsorbed in the pores and on the surface of the porous titanium, the functional material for secondary batteries having a particle size Dv50 of 746 nm.

Embodiments of the present invention provide secondary battery functional material, and a preparation method and application thereof. By mixing a solution containing precursors of a lithium or sodium active material with a carrier material, followed by physical processes (such as shaking or dispersive stirring), the active material is uniformly distributed in pores and on a surface of the carrier material in the form of small particles, to obtain t secondary battery functional material . The functional material for secondary batteries involves the adsorption of the active material within the pores of the carrier material, effectively combining the active material and the carrier material. The carrier material, when held under a certain voltage, can catalyze reactions of the active material, reducing the reaction activation energy of the active material. Additionally, the presence of the active material in the form of small particles results in more reaction sites and a larger reaction area, enhancing the overall reactivity of the material. When the functional material for secondary batteries provided by the embodiments of the present invention is applied in secondary batteries, a substantial number of active ions can be provided to replenish the irreversible active ions consumed during charge and discharge cycles, granting the secondary batteries high capacity and long cycle life.

The preparation method of the functional material for secondary batteries provided by the embodiment of the present invention is easy to operate, cost-effective, and suitable for large-scale production.

The above-mentioned specific embodiments further explain the purpose, technical solution and beneficial effects of the present invention in detail. It should be understood that the above are only specific embodiments of the present invention and are not used to limit the scope of protection of the present invention. Any modification, equivalent substitution, improvement, etc. made within the spirit and principles of the present invention should be included in the scope of protection of the present invention.

## Claims

1. A secondary battery functional material, comprising a carrier material and an active material; wherein the carrier material is a porous material catalyzing the active material at a voltage of 2.0-4.8 V, and the carrier material comprises one or more of the following: porous metal materials, porous ceramic materials, porous carbon materials, porous plastics, and molecular sieves;
the active material comprises lithium-containing compounds or sodium-containing compounds, and the active material is uniformly distributed in pores and on a surface of the carrier material in the form of small particles;
a particle size Dv50 of the active material is between 0.1 nm and10 µm, a particle size Dv50 of the carrier material is between 1 nm and 100 µm, and a particle size Dv50 of the functional material for secondary batteries is between 1 nm and 120 µm;
the lithium-containing compounds comprise one or more of the following: lithium carbonate, lithium hydroxide, lithium oxalate, lithium acetate, lithium formate, lithium oxide, lithium peroxide, lithium sulfide, lithium fluoride and lithium nitride;
the sodium-containing compounds comprise one or more of the following: sodium carbonate, sodium hydroxide, sodium oxalate, sodium acetate, sodium formate, sodium oxide, sodium peroxide, sodium sulfide and sodium fluoride;
the porous metal materials comprise aluminum, copper, iron, silver, titanium, nickel, tungsten, cobalt, molybdenum, platinum, magnesium, lead and zinc or one or more alloy materials of the above metals;
the porous ceramic materials comprise one or more of the following: porous alumina, porous zirconia, porous magnesia, porous silicon carbide, porous silicon nitride, cordierite, high silica silicate, aluminosilicate and aluminum titanate;
the porous carbon materials comprise one or more of the following: activated carbon, expanded graphite, activated carbon fiber, carbon nanotube and porous acetylene black;
the porous plastics comprise one or more of the following: porous polyethylene, porous polystyrene, porous polyvinyl chloride, porous polypropylene, porous polyurethane, and porous phenolic resin;
the molecular sieves comprise one or more of the following: cross-linked dextran, carbon molecular sieves, or zeolites; and
the secondary battery functional material is obtained by adsorbing a clear solution containing precursors of the active material into the pores of the carrier material, and drying treatment, with a temperature for the drying treatment being 60°C-300°C.

2. The secondary battery functional material according to claim 1, wherein a pore diameter of the pores of the carrier material is between 0.1 nm and 20 µm;
a specific surface area of the carrier material is between 5 and 3000 m²/g; and
a mass ratio of the active material to the carrier material is 0.1:1-100:1.

3. A preparation method of the secondary battery functional material according to any one of claims 1-2, comprising:
dissolving a specific quantity of a precursor of an active material into a solvent, and stirring uniformly to obtain a clear solution;
adding a specific quantity of a carrier material into the clear solution and dispersing adequately and uniformly to allow the clear solution to be adsorbed into pores of the carrier material, for obtaining a solution of a composite material; and
drying the solution of the composite material to remove the solvent, and allowing the clear solution in pores of the composite material to crystallize into a fine particulate active material, ultimately obtaining the functional material for secondary batteries;
wherein the carrier material comprises one or more of the following: porous metal materials, porous ceramic materials, porous carbon materials, porous plastics, and molecular sieves; and
the precursor of the active material comprises lithium-containing compound raw materials or sodium-containing compound raw materials.

4. The preparation method according to claim 3, wherein the lithium-containing compound raw materials comprise one or more of the following: lithium carbonate, lithium hydroxide, lithium oxalate, lithium acetate, lithium formate, lithium oxide, lithium peroxide, lithium sulfide, lithium fluoride and lithium nitride;
the sodium-containing compound raw materials comprise one or more of the following: sodium carbonate, sodium hydroxide, sodium oxalate, sodium acetate, sodium formate, sodium oxide, sodium peroxide, sodium sulfide and sodium fluoride;
the solvent comprises one or more of the following: deionized water, ethanol, ether, acetone, N-methylpyrrolidone (NMP), N, N-dimethylformamide (DMF), ethyl acetate, benzene and chloroform; and
a mass ratio of the solvent to the active material is 5:1-200:1.

5. The preparation method according to claim 3, wherein the porous metal materials comprise aluminum, copper, iron, silver, titanium, nickel, tungsten, cobalt, molybdenum, platinum, magnesium, lead and zinc or one or more alloy materials of the above metals;
the porous ceramic materials comprise one or more of the following: porous alumina, porous zirconia, porous magnesia, porous silicon carbide, porous silicon nitride, cordierite, high silica silicate, aluminosilicate and aluminum titanate;
the porous carbon materials comprise one or more of the following: activated carbon, expanded graphite, activated carbon fiber, carbon nanotube and porous acetylene black;
the porous plastics comprise one or more of the following: porous polyethylene, porous polystyrene, porous polyvinyl chloride, porous polypropylene, porous polyurethane, and porous phenolic resin; and
the molecular sieves comprise one or more of the following: cross-linked dextran, carbon molecular sieves, or zeolites.

6. The preparation method according to claim 3, wherein methods for the adequate dispersion comprise one or more of the following: shaking dispersion, stirring dispersion, ultrasonic dispersion, and ball milling dispersion;
devices for the adequate dispersion comprise one or more of the following: oscillating shakers, stirrers, ultrasonic dispersion machines, or ball mills; and
a duration for the adequate dispersion is 0.5-72 hours.

7. The preparation method according to claim 3, wherein methods for the drying treatment comprise one or more of the following: rotary evaporation drying, stir-heating drying, spray drying, vacuum heating drying, and forced air drying after filtration; and
a temperature for the drying treatment is 60°C-300°C, and a duration is 0.5-48 hours.

8. A positive electrode sheet, comprising the secondary battery functional material according to any one of claims 1-2.

9. A secondary battery, comprising the positive electrode sheet according to claim 8.
